# FASCICULE DE BREVET EUROPEEN

(11) **EP 2 168 415 B1**
(45) Date de publication et mention de la délivrance du brevet: **27.02.2019**
(21) Numéro de dépôt: 09171004.6
(22) Date de dépôt: 22.09.2009
(51) Int. Cl.: A01C 7/20, A01C 5/06, A01B 73/04

(54) **Dispositif de recouvrement perfectionné**
Verbesserte Furchenabdeckeinrichtung
Improved device for covering furrows

(30) Priorité: 26.09.2008 FR 0856502
(43) Date de publication de la demande: 31.03.2010
(73) Titulaire: KUHN S.A., 67700 Saverne (FR)
(72) Inventeur: Viriat, Laurent, 67440 Westhouse-Marmoutier (FR)

(56) Documents cités:
- EP-A- 0 692 179
- EP-A- 0 978 227
- FR-A- 2 622 762

## Description

La présente invention se rapporte au domaine technique général des machines agricoles et en particulier à un dispositif de recouvrement. La fonction d'un tel dispositif de recouvrement est de niveler les sillons créés par la machine agricole. Ce dispositif de recouvrement comportant une structure support destinée à être fixée sur ladite machine agricole et une structure porteuse s'étendant sensiblement transversalement à la direction d'avance au travail, cette dernière est reliée à ladite structure support au moyen d'au moins deux bras articulés, des outils de recouvrement étant liés directement ou indirectement à ladite structure porteuse.

De tels dispositifs de recouvrement destinés à équiper une machine agricole de travail du sol et/ou de semis sont connus par l'homme du métier. Un dispositif de recouvrement connu est monté à l'arrière d'un semoir. Il est composé d'une structure porteuse sur laquelle sont articulés deux tronçons de largeur sensiblement identique. Chaque tronçon est pourvu d'outils de recouvrement. Cette structure porteuse s'étend transversalement à la direction d'avance et est constituée d'une seule pièce. La structure porteuse est liée à la structure support au moyen de bras. Chaque tronçon est lié à la structure porteuse au moyen d'une articulation respective d'axe sensiblement parallèle à la direction d'avance. Cette articulation s'étend dans le voisinage du centre du tronçon. A l'arrière du semoir, le dispositif de recouvrement permet de recouvrir les graines implantées au préalable dans le sol et d'égaliser la couche superficielle de terre recouvrant les graines.

A cause de la position centrale de l'articulation sur le tronçon, le recouvrement des graines est différent entre la zone centrale et les zones extrêmes du tronçon. D'autre part, on constate aussi que lorsqu'un des tronçons rencontre un obstacle, c'est toute la structure porteuse qui pivote vers le haut pour passer l'obstacle. Les outils de recouvrement ne sont alors plus en contact avec le sol et les sillons creusés par les socs ne sont pas refermés après la dépose des graines, ce qui entraîne une levée hétérogène. La plupart des graines non recouvertes dessèche ou est ramassée par les oiseaux.

Un autre dispositif de recouvrement connu présente une structure porteuse en deux parties. Chaque partie est liée à la structure support au moyen de deux bras respectifs, un bras supporte donc chaque extrémité. Chaque partie s'adapte au profil du terrain de manière indépendante et la profondeur de travail peut être adaptée pour obtenir un nivellement du sol sensiblement identique pour les deux parties. Au niveau des extrémités adjacentes des deux parties, on constate un encombrement important du fait de l'emploi de deux bras côte à côte. L'accès à cette région du dispositif de recouvrement est particulièrement difficile pour effectuer un ajustement du mécanisme de réglage équipant les bras. D'autre part le montage d'un tel dispositif de recouvrement est laborieux dans cet espace relativement restreint. Un tel dispositif de recouvrement est présenté sur le prospectus TRAMLINE CX de SULKY daté du 02/2005. Des autres machines avec des dispositifs de recouvrement portés par des bras articulés sont connues de EP 0 978 227 A et FR 2 622 762 A.

La présente invention a pour but de remédier aux différents inconvénients de l'état de la technique. Elle doit notamment proposer un dispositif dont la fabrication est moins onéreuse et dont le montage est plus aisé. Le dispositif doit également réaliser un bon travail de nivellement et de recouvrement.

A cet effet, une importante caractéristique de l'invention consiste en ce que ladite structure porteuse présente au moins deux parties, dont les extrémités adjacentes sont reliées par un point d'appui commun porté par un bras intermédiaire. Un tel dispositif permet de réduire par rapport à l'état de la technique, le nombre de pièces nécessaires à la réalisation de la liaison entre un dispositif de recouvrement et le châssis de la machine agricole ou un élément solidaire du châssis, d'où un montage de l'ensemble plus facile et une construction moins onéreuse. D'autre part grâce au point d'appui commun, la pression du dispositif de recouvrement sur le sol est maîtrisée et le nivellement est régulier sur toute la largeur de travail.

D'autres caractéristiques et avantages de l'invention se dégageront des revendications et de la description qui vont suivre des exemples de réalisation non limitatifs de l'invention avec référence aux dessins annexés dans lesquels :
- la **figure 1** représente une vue de côté d'une machine agricole équipée d'un dispositif de recouvrement selon l'invention liée à un tracteur,
- la **figure 2** représente une vue en perspective du dispositif de recouvrement,
- la **figure 3** représente une vue arrière du dispositif de recouvrement.

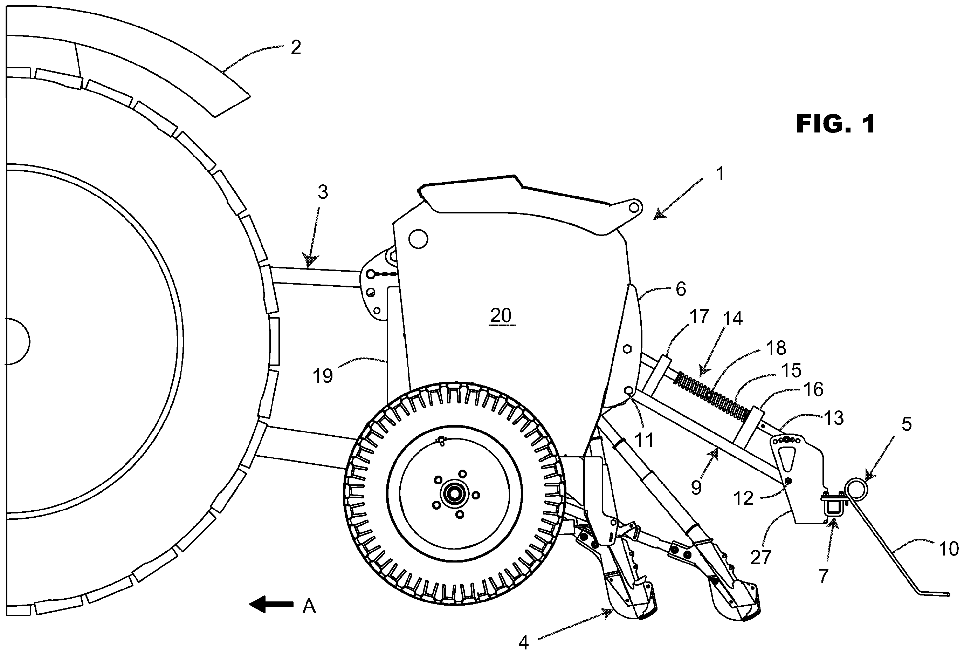

Telle qu'elle est représentée sur la figure 1, la machine agricole (1) est liée à un tracteur (2) par l'intermédiaire d'un dispositif d'attelage trois points (3). La machine (1) est ainsi déplacée suivant une direction et un sens d'avance indiqué par la flèche (A) lors du travail. Dans la suite de la description, les notions "avant" et "arrière" sont définies par rapport au sens d'avance (A) et les notions "droite" et "gauche" sont définies en regardant ladite machine (1) de l'arrière dans le sens d'avance (A).

La machine agricole (1) est équipée notamment d'outils (4) effectuant un travail et d'un dispositif de recouvrement (5). Le dispositif de recouvrement (5) a pour fonction d'égaliser la surface du sol et éventuellement les irrégularités qui sont engendrées par les outils de travail (4). Pour cela, le dispositif de recouvrement (5) est disposé derrière des outils de travail (4). Il présente une structure support (6) destinée à être fixée sur ladite machine agricole (1) et une structure porteuse (7) s'étendant sensiblement transversalement à la direction d'avance (A) au travail. La structure porteuse (7) est reliée à la structure support (6) au moyen d'au moins deux bras (8, 9) articulés. Des outils de recouvrement (10) sont liés directement ou indirectement à la structure porteuse (7). Les outils de recouvrement (10) referment le sillon ouvert par les outils de travail (4), ils provoquent un déplacement latéral et superficiel de la terre pour égaliser la surface du sol.

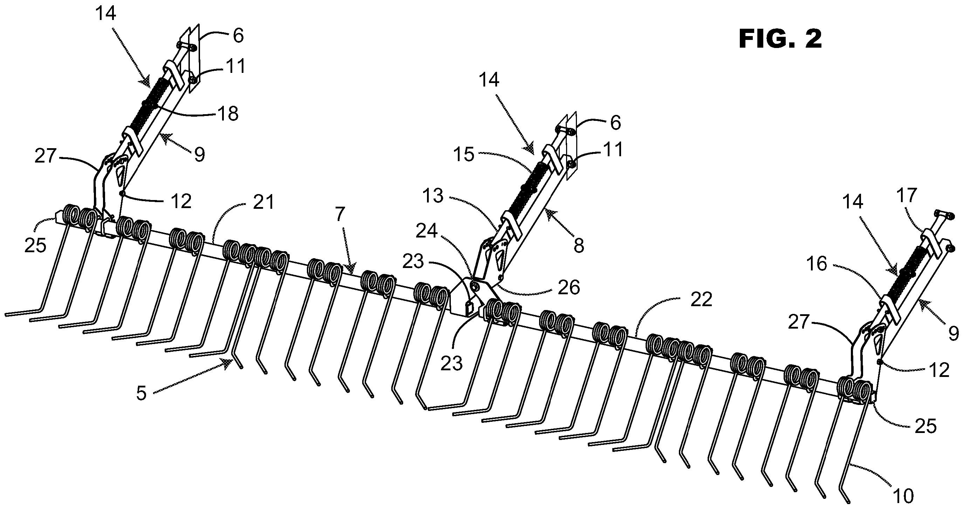

A la lumière de la figure 2, chaque bras (8, 9) est lié, à l'une de ses extrémités, à la structure support (6) au moyen d'une première articulation (11) d'axe longitudinal horizontal et transversal à la direction d'avance (A) au travail et, à l'autre extrémité, à la structure porteuse (7) au moyen d'une deuxième articulation (12) d'axe longitudinal parallèle à l'axe de la première articulation (11). Le dispositif de recouvrement (5) est doté d'un mécanisme (14) de délestage ou de lestage. Ainsi chaque bras (8, 9) est doublé d'une tige (13). La tige (13) est disposée parallèlement au bras (8, 9) correspondant et s'étend au dessus dudit bras (8, 9). De cette manière, le bras (8, 9) et la tige (13) forment un parallélogramme avec la structure support (6) et la structure porteuse (7). Ce parallélogramme est compris dans un plan vertical et parallèle à la direction d'avance (A) au travail. Ainsi le débattement du dispositif de recouvrement (5) se fait parallèlement au sol.

La structure porteuse (7) est reliée à chaque bras (8, 9) via un support (26, 27) respectif. Ce support (26, 27) comporte une série de trous réalisant un moyen de réglage pour l'inclinaison des outils de recouvrement (10) par rapport au sol. Le parallélogramme permet un débattement de la structure porteuse (7) et des outils de recouvrement (10) en conservant l'angle d'inclinaison de ces derniers.

Le mécanisme (14) équipant chaque bras (8, 9) comporte encore un élément élastique (15) et des butées (16, 17, 18). L'élément élastique (15) permet d'appliquer plus ou moins de pression sur la structure porteuse (7) et donc sur les outils de recouvrement (10). Les butées (16, 17) sont montées sur les bras (8, 9) et réalisent respectivement une butée basse et une butée haute pour l'élément élastique (15) qui est inséré sur la tige (13). Les butées (16, 17) s'étendent sensiblement vers le haut autour de la tige (13). L'élément élastique (15) est maintenu dans une position déterminée sur la tige (13) par l'intermédiaire de la butée médiane (18). Cette butée médiane (18) est disposée entre les deux butées (16, 17). L'élément élastique (15) est amené à être comprimé entre la butée médiane (18) et l'une des butées (16, 17) pour réaliser un lestage ou un délestage du dispositif de recouvrement (5). Sur la figure 1, l'élément élastique (15) avec la tige (13) exercent une force sur la structure porteuse (7) en direction du sol, c'est-à-dire un lestage. L'élément élastique (15) est par exemple un ressort de compression. L'intensité de la force développée par l'élément élastique (15) peut être réglée. En fonction du nombre de spires s'étendant entre la butée médiane (18) et la butée (16, 17) active, la pression du dispositif de recouvrement (5) sur le sol est plus ou moins élevée. La butée médiane (18) est réalisée par un boulon ou par tout élément équivalent. La butée médiane (18) traverse de part en part l'élément élastique (15) et la tige (13).

La machine agricole (1) représentée sur la figure 1 est un semoir du type semoir en lignes. Un tel semoir permet un semis régulier en lignes équidistantes à profondeur uniforme. Ce semoir comporte un châssis (19) sur lequel est placée une trémie de stockage (20). Les graines contenues dans la trémie (20) sont introduites dans le sol par l'intermédiaire d'organes d'enterrage tels que des socs ou des disques. Ces organes ouvrent des sillons de profondeur déterminée dans lesquels les graines sont placées puis recouvertes par le dispositif de recouvrement (5). Un dispositif de dosage, situé dans la partie inférieure de la trémie (20), permet de régler la quantité de graines déposées en terre. Les graines sont acheminées depuis la trémie (20) vers les organes d'enterrage au moyen de tubes pour un semoir mécanique ou au moyen de tuyaux pour un semoir à transport pneumatique. Le dispositif de recouvrement (5) permet d'effacer les sillons créés par les organes d'enterrage et de ramener de la terre fine et des petites mottes sur la ligne de semis. Le dispositif de recouvrement (5) ne doit pas perturber le placement des graines dans les sillons. Dans le cas d'un semoir, les organes d'enterrage sont considérés comme étant les outils de travail (4).

Selon une importante caractéristique de l'invention, la structure porteuse (7) présente au moins deux parties (21, 22) dont les extrémités (23) adjacentes sont reliées à un point d'appui commun (24). Les parties (21, 22) présentent chacune deux extrémités (23, 25). Grâce à ce point d'appui commun (24), le dispositif de recouvrement (5) s'adapte aux irrégularités du sol et assure un nivellement et/ou un recouvrement régulier sur la largeur de travail. Par ailleurs, la pression du dispositif de recouvrement (5) sur le sol est maîtrisée et peut être adaptée en fonction de la nature du sol pour obtenir un travail optimal des outils de recouvrement (10). Dans l'exemple de réalisation d'un semoir, le dispositif de recouvrement (5) doit permettre un recouvrement régulier des graines, c'est-à-dire que l'épaisseur de terre recouvrant les graines doit être similaire sur toute la largeur de travail pour assurer une levée homogène.

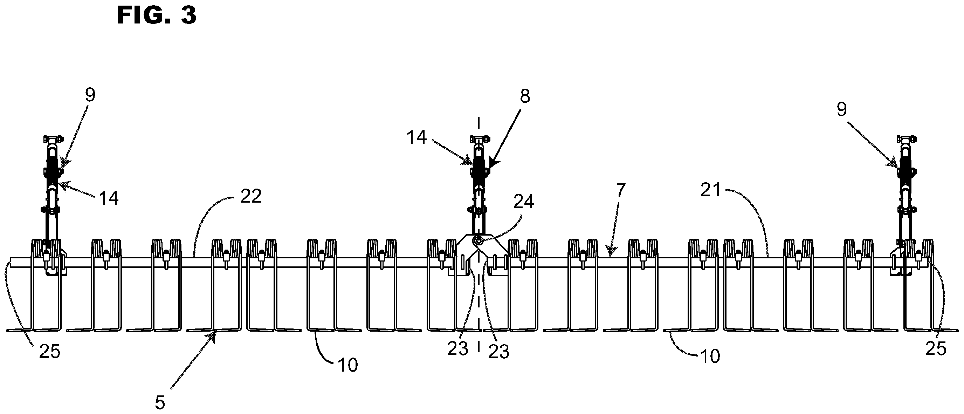

D'une manière particulièrement avantageuse et comme représenté sur les figures 2 et 3, les extrémités extérieures (25) sont liées au bras extérieur (9) respectif au moyen d'un support extérieur (27). Ce support extérieur (27) est lié de manière fixe à l'extrémité extérieure (25). Les extrémités (23) adjacentes des parties (21, 22) sont portées par un bras intermédiaire (8). Ce bras intermédiaire (8) est commun et s'étend dans le voisinage du plan vertical médian du dispositif de recouvrement (5). La structure porteuse (7) est ainsi reliée à la structure support (6) au moyen de trois bras (8, 9) articulés. Pour obtenir un nivellement régulier sur la largeur de travail, le réglage de l'élément élastique (15) au niveau du bras intermédiaire (8) est différent du réglage des bras extérieurs (9). Lorsque les parties (21, 22) présentent une même largeur, le bras intermédiaire (8) s'étend sensiblement dans le plan vertical médian. Les extrémités (23) adjacentes équipées d'une plaquette respective sont reliées au bras intermédiaire (8) via le support intermédiaire (26). D'une manière avantageuse, le support intermédiaire (26) porte le point d'appui commun (24).

Dans l'exemple de réalisation représenté, le point d'appui commun (24) est réalisé par une articulation d'axe sensiblement parallèle à la direction d'avance (A). L'articulation est avantageusement une articulation pivot permettant à la structure porteuse (7) et notamment aux parties (21, 22) de s'adapter au sol. Avec cette articulation, l'appui au sol et l'inclinaison des outils de recouvrement sont maîtrisés afin de bien refermer les sillons après la dépose des graines. Cette articulation est avantageusement disposée sensiblement au dessus de la structure porteuse (7).

Selon un exemple non représenté, le point d'appui commun (24) peut être formé par un ergot qui s'engage dans une rainure. L'ergot est par exemple lié au support intermédiaire (26). La rainure ménagée dans chaque plaquette permet de guider le déplacement des extrémités (23) adjacentes des parties (21, 22). La rainure est avantageusement en forme d'arc de cercle.

Un dispositif de recouvrement selon l'invention peut aussi équiper une machine agricole de travail du sol telle qu'un cultivateur. Cette machine présente des outils de travail réalisés par des dents qui travaillent le sol et le dispositif de recouvrement permettant d'égaliser la terre. Les sillons créés par les dents sont nivelés par le dispositif de recouvrement disposé à l'arrière.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Dispositif de recouvrement (5) destiné à une machine agricole (1), le dispositif de recouvrement (5) comportant une structure support (6) destinée à être fixée sur ladite machine agricole (1) et une structure porteuse (7) s'étendant sensiblement transversalement à la direction d'avance (A) au travail, ladite structure porteuse (7) étant reliée à ladite structure support (6) au moyen d'au moins deux bras (8, 9) articulés, des outils de recouvrement (10) étant liés directement ou indirectement à la structure porteuse (7), ladite structure porteuse (7) présente au moins deux parties (21, 22) dont les extrémités (23) adjacentes sont reliées à un point d'appui commun (24), ***caractérisé en ce que*** ledit point d'appui commun (24) est porté par un bras intermédiaire (8).

2. Dispositif de recouvrement selon la revendication 1, ***caractérisé en ce* que** ledit bras intermédiaire (8) s'étend dans le voisinage du plan vertical médian du dispositif de recouvrement (5).

3. Dispositif de recouvrement selon la revendication 1 ou 2, ***caractérisé en ce* que** les extrémités extérieures des parties (21, 22) sont montées sur un bras extérieur (9) respectif.

4. Dispositif de recouvrement selon l'une quelconque des revendications 1 à 3, ***caractérisé en ce* que** ladite structure porteuse (7) est reliée à ladite structure support (6) au moyen de trois bras (8, 9) articulés.

5. Dispositif de recouvrement selon la revendication 1, ***caractérisé en ce* que** lesdites extrémités (23) adjacentes sont reliées audit bras intermédiaire (8) au moyen d'un support intermédiaire (26).

6. Dispositif de recouvrement selon la revendication 5, ***caractérisé en ce* que** ledit support intermédiaire (26) porte ledit point d'appui commun (24).

7. Dispositif de recouvrement selon l'une quelconque des revendications 1 à 6, ***caractérisé en ce* que** ledit point d'appui commun (24) est réalisé par une articulation d'axe sensiblement parallèle à la direction d'avance (A) au travail.

8. Machine agricole (1), ***caractérisée en ce* qu'**elle comporte un dispositif de recouvrement (5) selon l'une quelconque des revendications 1 à 7.

9. Machine agricole selon la revendication 8, ***caractérisée en ce* qu'**il s'agit d'un semoir.

## Patentansprüche

1. Abdeckvorrichtung (5), die für eine landwirtschaftliche Maschine (1) bestimmt ist, wobei die Abdeckvorrichtung (5) eine Abstützvorrichtung (6), die dazu bestimmt ist, auf der landwirtschaftlichen Maschine (1) befestigt zu werden, und ein Tragwerk (7), das sich im Wesentlichen quer zur Arbeitsvorschubrichtung (A) erstreckt, umfasst, wobei das Tragwerk (7) mit der Abstützvorrichtung (6) mittels mindestens zweier angelenkter Arme (8, 9) verbunden ist, wobei Zustreicher (10) direkt oder indirekt mit dem Tragwerk (7) verbunden sind, wobei das Tragwerk (7) mindestens zwei Teile (21, 22) aufweist, deren benachbarte Enden (23) mit einem gemeinsamen Stützpunkt (24) verbunden sind, ***dadurch gekennzeichnet,* dass** der gemeinsame Stützpunkt (24) von einem Zwischenarm (8) getragen wird.

2. Abdeckvorrichtung nach Anspruch 1, ***dadurch gekennzeichnet,* dass** sich der Zwischenarm (8) in der Nähe der vertikalen Mittelebene der Abdeckvorrichtung (5) erstreckt.

3. Abdeckvorrichtung nach Anspruch 1 oder 2, ***dadurch gekennzeichnet,* dass** die äußeren Enden der Teile (21, 22) auf einem jeweiligen äußeren Arm (9) angebracht sind.

4. Abdeckvorrichtung nach irgendeinem der Ansprüche 1 bis 3, ***dadurch gekennzeichnet,* dass** das Tragwerk (7) mit der Abstützvorrichtung (6) mittels drei angelenkten Armen (8, 9) verbunden ist.

5. Abdeckvorrichtung nach Anspruch 1, ***dadurch gekennzeichnet,* dass** die benachbarten Enden (23) mit dem Zwischenarm (8) mittels einer Zwischenabstützung (26) verbunden sind.

6. Abdeckvorrichtung nach Anspruch 5, ***dadurch gekennzeichnet,* dass** die die Zwischenabstützung (26) den gemeinsamen Stützpunkt (24) trägt.

7. Abdeckvorrichtung nach irgendeinem der Ansprüche 1 bis 6, ***dadurch gekennzeichnet,* dass** der gemeinsame Stützpunkt (24) von einem Gelenk mit einer zur Arbeitsvorschubrichtung (A) im Wesentlichen parallelen Achse ausgeführt wird.

8. Landwirtschaftliche Maschine (1), ***dadurch gekennzeichnet,* dass** sie eine Abdeckvorrichtung (5) nach irgendeinem der Ansprüche 1 bis 7 umfasst.

9. Landwirtschaftliche Maschine nach Anspruch 8, ***dadurch gekennzeichnet,* dass** es sich um eine Sämaschine handelt.

## Claims

1. Covering device (5) for an agricultural machine (1), the covering device (5) comprising a support structure (6) intended to be fastened to the said agricultural machine (1) and a carrier structure (7) extending substantially transversely to the direction of advance (A) at work, the said carrier structure (7) being connected to the said support structure (6) by at least two articulated arms (8, 9), covering tools (10) being directly or indirectly connected to the carrier structure (7), the said carrier structure (7) has at least two parts (21, 22), the adjacent ends (23) of which are connected to a common bearing point (24), ***characterized in that*** the said bearing point (24) is supported by an intermediate arm (8).

2. Covering device according to claim 1, ***characterized in that*** the said intermediate arm (8) extends in the vicinity of the vertical midplane of the covering device (5).

3. Covering device according to claim 1 or 2, ***characterized in that*** the outer ends of the parts (21, 22) are mounted on a respective outer arm (9).

4. Covering device according to anyone of claims 1 to 3, ***characterized in that*** the said carrier structure (7) is connected to the said support structure (6) by means of three articulated arms (8, 9).

5. Covering device according to claim 1, ***characterized in that*** the said adjacent ends (23) are connected to the said intermediate arm (8) by means of an intermediate support (26).

6. Covering device according to claim 5, ***characterized in that*** the said intermediate support (26) supports the said common bearing point (24).

7. Covering device according to anyone of claims 1 to 6, ***characterized in that*** the said common bearing point (24) is achieved by an articulation with an axis substantially parallel to the direction of advance (A) at work.

8. Agricultural machine (1), ***characterized in that*** it comprises a covering device (5) according to anyone of claims 1 to 7.

9. Agricultural machine according to claim 8, ***characterized in that*** it is a seed drill.
